# EUROPEAN PATENT APPLICATION

(11) **EP 4 826 776 A1**
(43) Date of publication of application: **21.10.2026**
(21) Application number: 24904278.9
(22) Date of filing: 13.12.2024
(51) Int. Cl.: H01M 4/134, H01M 4/1395, H01M 4/04, H01M 4/38, H01M 4/40, H01M 10/42, H01M 10/052, H01M 4/02

(54) **LITHIUM METAL ELECTRODE FOR LITHIUM SECONDARY BATTERY AND METHOD OF MANUFACTURING SAME**

(30) Priority: 15.12.2023 KR 20230183826
(71) Applicant: POSCO Holdings Inc., Pohang-si, Gyeongsangbuk-do 37859 (KR)
(72) Inventor: BAE, Hongyeul, Pohang-si, Gyeongsangbuk-do 37859 (KR); KIM, Jin Hong, Pohang-si, Gyeongsangbuk-do 37859 (KR); LEE, Garam, Pohang-si, Gyeongsangbuk-do 37859 (KR)
(74) Representative: Pfenning, Meinig & Partner mbB
(86) International application number: PCT/KR2024/020315
(87) International publication number: WO 2025/127713

(57) **Abstract**

The present invention relates to a lithium metal electrode and a method for manufacturing the same, wherein the lithium metal electrode of the present invention includes a current collector, a coating layer positioned on at least one surface of the current collector and including a lithiophilic alloy material, and a protective layer positioned on the coating layer, and wherein the coating layer is disposed in an area of 25.0% to 80.0% based on an entire area of the current collector.

## Description

### [TECHNICAL FIELD]

The present invention relates to a lithium secondary battery, and more particularly, to a lithium metal electrode for a lithium secondary battery and a method for manufacturing the same.

### [BACKGROUND ART]

In order to reduce the price and increase the energy density of secondary batteries, it is indispensable to use a lithium metal electrode as a negative electrode of a lithium secondary battery. Specifically, all-solid-state batteries have recently attracted attention as next-generation batteries for high energy density, such as for electric vehicle (EV) applications.

Since an all-solid-state battery does not use a liquid electrolyte, the all-solid-state battery has various advantages, such as excellent safety, capability of high-voltage operation, improved energy density of a battery pack due to reduction of cooling- and safety-related auxiliary materials, and operability in a wide temperature range. In order to substantially implement high energy density in such an all-solid-state battery, a thick and low-capacity graphite-based negative electrode material should be replaced with thin and high-capacity lithium, and in view of economic feasibility and energy density, a thin-film lithium metal electrode having a thickness of substantially 10 µm to 20 µm is required.

In general, in the case of a lithium metal electrode, there is difficulty in technology for manufacturing lithium metal to be thin through a commercial process, and dendrite growth caused by nonuniform current density and electrochemical reactions during charging and discharging of a secondary battery has become a problem. This may induce continuous side reactions with an electrolyte and may lead to an internal short circuit in which a negative electrode and a positive electrode contact each other.

The growth of dendrites may cause serious problems in low lifespan characteristics and safety, and accordingly, there is difficulty in substantially utilizing an ultra-thin lithium metal negative electrode.

Various methods have been proposed as methods for increasing lifespan by suppressing the dendrites, but there is a problem in that it is difficult to simultaneously implement high energy density through thinning of lithium and sufficient lifespan characteristics. In order to solve the above problem, it is intended to maximize a surface area of a lithiophilic material capable of reacting with lithium to form an alloy by coating, on a current collector, a nanoscale metal layer made of a lithiophilic layer material, and to prevent current density from decreasing due to expansion of the surface area of the current collector.

However, forming a metal layer made of a lithiophilic material on a current collector has a problem in that commercialization is difficult due to an increase in raw material costs.

### [DETAILED DESCRIPTION OF THE INVENTION]

### [Technical Problem]

A lithium metal electrode for a lithium secondary battery according to one embodiment of the present invention is to provide a lithium secondary battery in which raw material costs are reduced and, at the same time, charge/discharge lifespan characteristics are improved when applied to a battery.

A method for manufacturing a lithium metal electrode for a lithium secondary battery according to another embodiment of the present invention is to provide a method for manufacturing a lithium metal electrode for a lithium secondary battery having the above-described advantages.

### [Technical Solution]

A lithium metal electrode according to one embodiment of the present invention includes a current collector, a coating layer positioned on at least one surface of the current collector and including a lithiophilic alloy material, and a protective layer positioned on the coating layer, wherein the coating layer may be disposed in an area of 25.0% to 80.0% based on the entire area of the current collector. In one embodiment, the coating layer may include a metal material having a plurality of island shapes.

In one embodiment, an area of the island shape may be 0.01 µm² to 0.50 µm². In one embodiment, the current collector may include at least one of copper, nickel, titanium, stainless steel, iron, gold, platinum, silver, tantalum, ruthenium, and alloys thereof.

In one embodiment, the lithiophilic alloy material of the coating layer may include at least one metal selected from the group consisting of In, Ag, Sn, Zn, Si, Al, and Bi. In one embodiment, the protective layer may include amorphous carbon.

In one embodiment, the lithium metal electrode may include a metal layer including a lithium alloy layer forming a lithium alloy with the coating layer. In one embodiment, the metal layer may be disposed on the lithium alloy layer and may include lithium.

A lithium metal electrode according to another embodiment of the present invention includes a current collector, a metal layer including a lithium alloy layer forming a lithium alloy with a coating layer positioned on at least one surface of the current collector and including a lithiophilic alloy material, and a protective layer disposed on the metal layer, wherein the coating layer may be disposed in an area of 25.0% to 80.0% based on the entire area of the current collector. In one embodiment, the metal layer may be disposed on the lithium alloy layer and may include lithium.

A method for manufacturing a lithium metal electrode according to still another embodiment of the present invention may include: preparing a current collector; forming, on at least one surface of the current collector, a coating layer including a lithiophilic alloy material using a coating composition including a lithiophilic component; and forming a protective layer on a surface of the coating layer including the lithiophilic alloy material, wherein the method may include forming the coating layer including the lithiophilic alloy material. <Equation 1> $3.40 \leq plating time \left(h\right) \times coating layer coverage \left(%\right) \times 100 \leq 75.0$

In Equation 1, the plating time is an electroplating time in the step of forming the coating layer including the lithiophilic alloy material, and the coating layer coverage means an area in which the coating layer including the lithiophilic alloy material is disposed, based on 100% of an area of the current collector.

In one embodiment, forming the coating layer including the lithiophilic alloy material may include controlling the coating layer coverage to 25.0% to 80.0%. In one embodiment, after forming the protective layer, the method may include positioning, in a plating solution, the current collector on which the coating layer including the lithiophilic alloy material and the protective layer are formed, then positioning a lithium supply source at a predetermined distance from the protective layer, and applying current between the current collector and the lithium supply source to form a metal layer including a lithium alloy in which the lithiophilic component included in the coating layer and lithium deposited from the lithium supply source are alloyed.

In one embodiment, forming the coating layer including the lithiophilic alloy material may be performed at an accumulated current of 0.10 mAh/dm² to 1.30 mAh/dm². In one embodiment, forming the coating layer including the lithiophilic alloy material may be performed for a plating time of 45 seconds or less.

In one embodiment, forming the coating layer including the lithiophilic alloy material may be performed at a plating current in a range of 0.5 mA/cm² to 2.0 mA/cm². In one embodiment, in the step of applying current between the current collector and the lithium supply source to form the metal layer including the lithium alloy in which the lithiophilic component included in the coating layer including the lithiophilic alloy material and lithium deposited from the lithium supply source are alloyed, the method may include electrodepositing at a maximum current density in a range of 6 mA/cm² to 12 mA/cm².

### [Advantageous Effects]

A lithium metal electrode for a lithium secondary battery according to one embodiment of the present invention provides an economical lithium secondary battery having improved charge/discharge lifespan characteristics by including a metal layer having a coverage within a predetermined range on a current collector.

A method for manufacturing a lithium metal electrode for a lithium secondary battery according to another embodiment of the present invention provides a method for manufacturing a lithium metal electrode for a lithium secondary battery having the above-described advantages.

### [BRIEF DESCRIPTION OF THE DRAWINGS]

FIGS. 1A to 1C show lithium metal electrodes manufactured according to one embodiment.
FIG. 2 is a schematic view of a method for manufacturing a lithium metal electrode of the present invention.
FIG. 3 is a scanning electron microscope (SEM) photograph showing a structure and a thickness of an alloy material coating layer plated on a current collector according to one embodiment of the present invention.
FIGS. 4A and 4B show surface and cross-sectional microstructures when a protective layer is disposed on a current collector coated with an alloy material.
FIGS. 5A and 5B show electrodeposition appearances according to maximum current density in electrodeposition processes according to Examples and Comparative Examples.
FIGS. 6A and 6B are drawings showing surface microstructure and plating layer image mapping results of an Example of the present invention, FIGS. 6C and 6D are drawings showing surface microstructure and plating layer image mapping results of a Comparative Example of the present invention, and FIGS. 6E and 6F are drawings showing surface microstructure and plating layer image mapping results of another Comparative Example of the present invention.
FIG. 7 shows charge/discharge lifespan evaluation results of Examples and Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

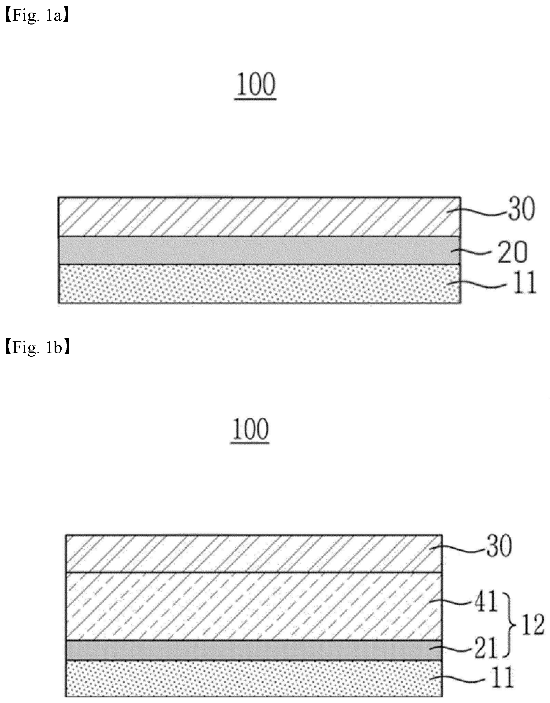

FIGS. 1A to 1C show a lithium metal electrode (100) manufactured according to one embodiment.

Referring to FIG. 1A, the lithium metal electrode (100) according to one embodiment includes a current collector (11) and a coating layer (20) including a lithiophilic alloy material positioned on at least one surface of the current collector (11), and further includes a protective layer (30) positioned on the other surface of the coating layer (20) including the lithiophilic alloy material, the other surface facing the current collector (11).

The current collector (11) may be a member for electrical connection in a lithium secondary battery. The current collector (11) may have a form of a foil, but is not limited thereto, and may have, for example, a form of a mesh, foam, rod, wire, or a sheet obtained by weaving wires or fibers.

The current collector (11) may use a material having electrical conductivity and limited reactivity with lithium. Specifically, as a material of the current collector (11), for example, one of copper, nickel, titanium, stainless steel, gold, platinum, silver, tantalum, ruthenium, and alloys thereof, or a combination thereof, may be used.

In one embodiment, the current collector (11) may have a thickness of 1 µm to 50 µm. When the current collector (11) is excessively thick, battery weight increases, causing a problem of lowering energy density of the battery. When the current collector (11) is excessively thin, there is a risk of overheating and breakage during high-current operation, and the current collector may be damaged by tension during a battery manufacturing process.

The coating layer (20) including the lithiophilic alloy material is positioned on the current collector (11), and may be disposed in an area of 25.0% to 80.0% based on the entire area of the current collector. Specifically, the coating layer (20) including the lithiophilic alloy material may include a lithiophilic alloy material. Specifically, the coating layer (20) including the lithiophilic alloy material may be 30% to 70%, more specifically 35% to 65%, more specifically 35.2% to 62.5%, and more specifically 38% to 62.5%, based on the entire area of the current collector. The area of the coating layer (20) including the lithiophilic alloy material may mean an area occupied by the lithiophilic alloy material in the entire area when a metal, for example, the coating layer (20) including the lithiophilic alloy material, is coated on the current collector (11) by plating.

The coating layer (20) of the present invention is not disposed on the entire surface of the current collector (11), but is disposed on the current collector (11) within the above-described range, thereby providing an advantageous effect in that lithium can be easily deposited between the protective layer (30) and the current collector (11).

When an area ratio of the coating layer (20) relative to the entire area of the current collector (11) is outside the upper limit of the above-described range, in a process of additionally growing lithium by deposition or charging a battery, lithium is not deposited between the current collector (11) and the protective layer (30), but is deposited on an opposite surface of the protective layer (30). When the area ratio of the coating layer (20) relative to the entire area of the current collector (11) is outside the lower limit of the above-described range, the amount of the lithiophilic alloy material is insufficient, and thus the lithiophilic alloy material cannot smoothly form an alloy with lithium, thereby hindering movement of lithium and likewise causing a problem in that lithium is deposited on the opposite surface of the protective layer (30).

In one embodiment, the coating layer (20) may include a metal material having a plurality of island shapes. Specifically, the coating layer (20) may have, for example, an amorphous island shape in which at least one particle is aggregated. The island shape may mean that particles of the metal material constituting the coating layer (20) are amorphous, and that the particles of the metal material are connected and observed in the form of a lump.

In one embodiment, an area of the island shape may be 0.01 µm² to 0.50 µm². The area of the island shape may be a value measured as a range from a minimum area to a maximum area when an image having a horizontal length of 5 µm, a vertical length of 5 µm, and an area of 25 µm², observed using a scanning electron microscope, is divided into individual islands using an ImageJ program and the area of each individual island is calculated. Specifically, the area of the island shape may be 0.01 µm² to 0.20 µm², and more specifically 0.01 µm² to 0.15 µm².

When the area of the island shape is outside the upper limit of the above-described range, a particle size of the coating layer (200) including the individual lithiophilic alloy is excessively large and coverage is excessive, causing a problem in that lithium is deposited on an outer surface of the protective layer. When the area of the island shape is outside the lower limit of the above-described range, the amount of the lithiophilic alloy material is excessively insufficient, and thus the lithiophilic alloy material cannot smoothly form an alloy with lithium, thereby hindering movement of lithium during a charging process or the like, and causing a problem in that lithium is not deposited between the current collector and the protective layer, but is deposited on an opposite surface of the protective layer.

In one embodiment, the coating layer (20) may include a lithiophilic metal. Specifically, the lithiophilic metal may include, for example, at least one metal selected from the group consisting of In, Ag, Sn, Zn, Si, Al, and Bi.

The protective layer (30) is positioned on the coating layer (20) including the lithiophilic alloy material, and may include amorphous carbon. When lithium metal is used as a negative electrode in an all-solid-state battery, a high resistance is generated by a reaction between an all-solid-state electrolyte and lithium, and lithium dendrites are continuously generated due to local nonuniformity of current density during charging and discharging, or high-resistance lithium by-products are generated, whereby failure occurs due to a short circuit or overvoltage during charging and discharging, or battery capacity decreases.

The lithium metal electrode according to one embodiment includes the protective layer (30) including amorphous carbon, and thus can additionally improve structural safety as well as output characteristics and lifespan characteristics of the lithium metal electrode.

Specifically, the lithium metal electrode of the present embodiment includes the protective layer (30) including amorphous carbon, and thus the protective layer (30) can not only improve ionic conductivity, but also improve strength of the protective layer (30), and physically block dendrites during dendrite growth in the lithium electrode, thereby preventing a short circuit between electrodes and improving charge/discharge lifespan.

The amorphous carbon may be at least one selected from the group consisting of acetylene black, Super P black, carbon black, Denka black, activated carbon, graphite, hard carbon, and soft carbon, but is not limited thereto.

In one embodiment, the protective layer (30) may include a binder. The binder may be an aqueous binder, and the aqueous binder may be at least one selected from a rubber-based binder selected from the group consisting of acrylonitrile-butadiene rubber, styrene-butadiene rubber (SBR), and acrylic rubber, and a polymer resin selected from the group consisting of hydroxyethyl cellulose, carboxymethyl cellulose, and polyvinylidene fluoride, but is not limited thereto.

Here, the binder may be added in an amount of 1 part by weight to 15 parts by weight, specifically 3 parts by weight to 10 parts by weight, based on the weight of a slurry formed by mixing the first amorphous carbon and/or the second amorphous carbon and water. When the content of the binder satisfies the above range, the particles constituting the protective layer can be efficiently bound without causing reduction in battery energy density due to an increase in weight and volume, thereby forming a protective layer having excellent performance and further improving lifespan characteristics of a secondary battery.

When the content of the binder is excessively smaller than the above range, there is a problem in that bonding force between particles is reduced in forming the protective layer. When the content of the binder is excessively larger than the above range, not only is energy density reduced, but resistance of the protective layer is greatly increased, thereby interfering with lithium ion conduction.

In one embodiment, the protective layer (30) may have a thickness of 0.01 µm to 50 µm. Specifically, the protective layer (30) may have a thickness in a range of 1 µm to 20 µm. When the thickness of the protective layer satisfies the above range, the protective layer serves as a protective layer by having an appropriate thickness, and, due to an effect of having appropriate resistance for movement of lithium ions, formation of lithium dendrites on the surface of the protective layer can be prevented, and lithium ions can be well conducted through the inside of the protective layer, whereby lithium can be deposited on a lower surface of the protective layer.

When the protective layer is excessively thin, there is a problem in that the protective layer cannot serve as a protective layer. When the protective layer is excessively thick, resistance of the protective layer is excessively large, which may cause an increase in overvoltage during operation of a secondary battery, and there is a problem in that energy density of the battery is reduced due to an increase in weight and volume. However, the thickness of the protective layer may be variably adjusted depending on the design of the secondary battery structure.

In one embodiment, the lithium metal electrode may include a film layer disposed in at least a portion of the inside of the protective layer (30), between the metal layer (12) and the protective layer (30), and on the protective layer (30). Specifically, the film layer may be disposed in at least a portion of the inside of the protective layer (30), may be disposed between the metal layer (12) and the protective layer (30), may be disposed simultaneously inside the protective layer (30) and between the metal layer (12) and the protective layer (30), or may be disposed on the protective layer (30).

The film layer is formed by, for example, a reaction between lithium metal of the electrodeposited lithium supply source (40) and a plating solution during manufacture of the metal layer (12), and a thickness, composition, characteristics, and the like of the film layer can be controlled by controlling the composition of the plating solution used and conditions of the electrodeposition process.

In one embodiment, the film layer may include at least a portion of LiF. LiF may be formed because at least one solvent among a plurality of solvents used in the electrodeposition process includes a solvent having a high dielectric constant. Specifically, a sufficient LiF film may be formed inside and/or on the surface of the protective layer by increasing a salt decomposition dissociation degree of the solvent of the plating solution for electrodeposition, suppressing a salt decomposition reaction during electrodeposition, and promoting a solvent decomposition reaction. By including the film layer including at least a portion of LiF, lifespan can be improved and dendrite growth can be prevented during battery operation due to high ionic conductivity.

The film layer may have a thickness of 2 nm to 2 µm. Specifically, the film layer may have a thickness in a range of 10 nm to 500 nm. When the film layer is excessively thick, lithium ion conductivity decreases and interfacial resistance increases, thereby causing deterioration of charge/discharge characteristics when applied to a battery. When the film layer is excessively thin, the film layer may be easily lost in a process of applying the lithium metal electrode according to the embodiment to a battery. Accordingly, the film layer may have a thin thickness and may be uniformly and densely formed on the entire surface of the metal layer (12) and the protective layer (30) within the above thickness range.

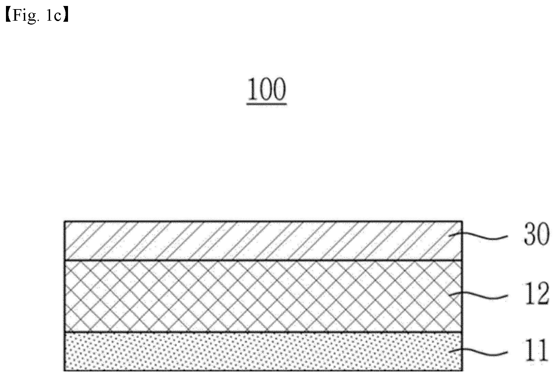

Referring to FIGS. 1B and 1C, unlike FIG. 1A, after a lithium electrodeposition process, the coating layer (20) including the lithiophilic alloy material and lithium form an alloy, thereby forming a layer including a lithium alloy.

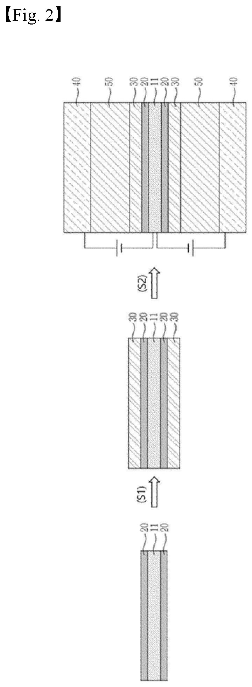

Referring again to FIG. 1B, in one embodiment, the metal layer (12) may include a lithium alloy layer (21) including a lithium alloy and a lithium metal layer (41) positioned on the lithium alloy layer (21). The lithium alloy layer (21) may be a layer including a lithium alloy in which a lithiophilic component included in the metal layer (12) on the current collector (11) and lithium deposited from the lithium supply source (40) are alloyed by applying current between the current collector (11) and the lithium supply source (40) of FIG. 2. Specifically, the metal layer (12) may include the lithium alloy layer (21) formed by alloying the coating layer (20) including the lithiophilic alloy material with electrodeposited lithium, and the lithium metal layer (41) disposed on the lithium alloy layer (21).

In one embodiment, the metal layer (12) may have a thickness of 1 µm to 100 µm, and more specifically 5 µm to 30 µm. Specifically, the thickness of the metal layer (12) may mean a thickness including the lithium alloy layer (21) formed by alloying with the coating layer (20) including the lithiophilic alloy material disposed in a plurality of island shapes and the lithium metal layer (41) positioned on the lithium alloy layer (21).

When the metal layer (12) is excessively thick, when the lithium metal electrode of the present embodiment is applied to a secondary battery, weight and volume of the battery increase, thereby lowering energy density. In addition, since time and costs of the electrodeposition process increase in proportion to thickness when forming the metal layer (12), the thickness of the metal layer (12) is preferably 100 µm or less.

When the metal layer (12) is excessively thin, when the lithium metal electrode of the present embodiment is applied to a secondary battery, charge/discharge lifespan of the battery deteriorates. Specifically, during charging and discharging of the battery, lithium in the battery is gradually consumed due to side reactions between lithium included in the negative electrode active material layer, that is, the metal layer of the present invention, and an electrolyte solution, thereby reducing battery capacity, and the amount of retained lithium capable of supplementing lithium consumed during charging and discharging decreases, whereby charge/discharge lifespan of the battery deteriorates. Accordingly, the thickness of the metal layer (12) is preferably 1 µm or more.

When an electrodeposition process is performed by applying a high current in order to increase the electrodeposition rate when forming the metal layer (12), there is a problem in that performance of a lithium secondary battery deteriorates. However, when the metal layer (12) is formed in a structure including the lithium alloy layer (21) including a lithium component as in the present embodiment, even when the electrodeposition process is performed by applying a high current, it is possible to prevent excessive generation of fine lithium particles or destruction of the protective layer (30) positioned on the surface of the lithium metal layer (41) already generated in the electrodeposition process.

Specifically, since the metal layer (12) of one embodiment includes the lithium alloy layer (21) including a lithium component, when the lithium metal layer (41) is formed on the lithium alloy layer (21) by applying a high current in the electrodeposition process, initially generated lithium particles can be induced to grow well, thereby forming particles having a coarse structure and, at the same time, the lithium metal layer (41), and consequently the metal layer (12), can have a uniform surface.

Accordingly, performance, specifically charge/discharge characteristics, of a secondary battery to which the lithium metal electrode according to the present embodiment is applied can be remarkably improved. In addition, since a lithium metal electrode for a secondary battery having high performance can be manufactured even when an electrodeposition process is performed at a high speed by applying a high current, productivity of the lithium metal electrode for a secondary battery can also be remarkably improved.

In one embodiment, the lithium alloy layer (21) includes a lithiophilic metal. When the lithium alloy layer (21) includes the lithiophilic metal as described above, since the lithium alloy layer (21) includes the lithiophilic metal having high electronic conductivity, electrons are smoothly supplied from the current collector and lithium ions are reduced, thereby advantageously facilitating electrodeposition of the lithium metal layer. The metal layer (12) serves to help lithium be more effectively deposited below the protective layer (30) during a charging process of the battery.

In one embodiment, the protective layer (30) may be positioned on the metal layer (12). Specifically, when the lithium electrodeposition process is performed, the protective layer (30) may be positioned on the metal layer (12). When the lithium electrodeposition process is performed, lithium is electrodeposited between the current collector (11) and the protective layer (30), and the metal layer (12) including the lithium alloy layer (21), which forms an alloy between the coating layer (20) including the lithiophilic alloy material and lithium, and the lithium metal layer (41) disposed on the lithium alloy layer (21) and including lithium may be disposed.

In one embodiment, the protective layer (30) may include amorphous carbon. When lithium metal is used as a negative electrode in an all-solid-state battery, a high resistance is generated by a reaction between an all-solid-state electrolyte and lithium, and lithium dendrites are continuously generated due to local nonuniformity of current density during charging and discharging, or high-resistance lithium by-products are generated, whereby failure occurs due to a short circuit or overvoltage during charging and discharging, or battery capacity decreases.

Referring again to FIG. 1C, in one embodiment, the lithium metal electrode (100) includes the current collector (11) and the metal layer (12) positioned on at least one surface of the current collector (11) and configured by mixing lithium and a lithium alloy. Here, the lithium alloy may be formed by applying current between the current collector (11) and the lithium supply source (40), thereby alloying the lithiophilic alloy material in the coating layer (20) including the lithiophilic alloy material formed on the current collector (11) with lithium deposited from the lithium supply source (40).

The metal layer (12) may include a lithiophilic metal. A detailed description thereof may refer to FIG. 1A.

In one embodiment, the metal layer (12) includes the lithiophilic metal. When the metal layer (12) including the lithiophilic metal is formed as described above, free energy of nucleation can be lowered at the initial stage of nucleation of lithium particles in the electrodeposition process, and thus a lithium metal layer having a coarse particle structure can be formed even under high-current and overvoltage conditions.

In one embodiment, the metal layer (12) includes the protective layer (30) positioned on the surface of the metal layer (12), and may include a film layer inside and/or on the surface of the protective layer (30). Detailed descriptions of the protective layer (30) and the film layer may refer to the descriptions provided above with reference to FIG. 1A.

FIG. 2 is a schematic view of a method for manufacturing a lithium metal electrode of the present invention.

Referring to FIG. 2, a method for manufacturing a lithium metal electrode according to one embodiment includes preparing a current collector (11), forming a coating layer (20) including a lithiophilic alloy material on at least one surface of the current collector (11) using a coating composition including a lithiophilic component, forming a protective layer (30) on a surface of the coating layer (20) including the lithiophilic alloy material using a slurry including amorphous carbon, positioning, in a plating solution (50), the current collector (11) on which the coating layer (20) including the lithiophilic alloy material and the protective layer (30) are formed, then positioning a lithium supply source (40) at a predetermined distance from the protective layer (30), and applying current between the current collector and the lithium supply source (40) to form a metal layer including a lithium alloy in which the lithiophilic component included in the coating layer and lithium deposited from the lithium supply source (40) are alloyed.

In the step of preparing the current collector (11), the current collector (11) may use a material having electrical conductivity and limited reactivity with lithium. Specifically, as a material of the current collector (11), for example, one of copper, nickel, titanium, stainless steel, gold, platinum, silver, tantalum, ruthenium, alloys thereof, carbon, a conductive polymer, and composite fibers in which a conductive layer is coated on a non-conductive polymer, or a combination thereof, may be used.

The step of forming the coating layer (20) including the lithiophilic alloy material on at least one surface of the current collector (11) using the coating composition including the lithiophilic component may coat the lithiophilic alloy material on at least one surface of the current collector. The lithiophilic alloy material may include, for example, at least one metal selected from the group consisting of In, Ag, Sn, Zn, Si, Al, and Bi.

In one embodiment, the step of forming the coating layer (20) including the lithiophilic alloy material may be performed using at least one method among electrolytic or electroless plating, sputtering, electron beam deposition, and thermal vapor deposition. For example, the step of forming the coating layer may be performed by an electroless plating method.

In one embodiment, the step of forming the coating layer coverage may satisfy the following Equation 1. <Equation 1> $3.40 \leq plating time \left(h\right) \times coating layer coverage \left(%\right) \times 100 \leq 75.0$

In Equation 1, the plating time is an electroplating time in the step of forming the coating layer including the lithiophilic alloy material, and the coating layer coverage means an area in which the coating layer including the lithiophilic alloy material is disposed, based on 100% of an area of the current collector.

Equation 1 may be an index indicating whether lithium can be deposited between the current collector (11) and the protective layer (30) in a process of additionally growing lithium by deposition or charging a battery. Specifically, Equation 1 may satisfy 3.53 to 75.0, specifically 3.53 to 73.0, more specifically 40.0 to 72.5, and still more specifically 45.0 to 60.0. By satisfying Equation 1, lithium electrodeposition characteristics are easy, and charge/discharge performance is excellent when applied to a battery.

When Equation 1 is outside the upper limit of the above-described range, in a process of additionally growing lithium by deposition or charging a battery, lithium is not deposited between the current collector and the protective layer, but is deposited on an opposite surface of the protective layer. When Equation 1 is outside the lower limit of the above-described range, the amount of the lithiophilic alloy material is insufficient, and thus the lithiophilic alloy material cannot smoothly form an alloy with lithium, thereby hindering movement of lithium and likewise causing a problem in that lithium is deposited on the opposite surface of the protective layer.

In one embodiment, the step of forming the coating layer may be a step of controlling the coating layer coverage to 25.0% to 80.0%. Specifically, the coating layer coverage means an area in which the coating layer is disposed on the current collector based on 100% of an area of the current collector, and may satisfy 30.0% to 70.0%, more specifically 35.0% to 65.0%, more specifically 35.2% to 62.5%, and more specifically 38.0% to 62.5%.

By controlling the coating layer coverage within the above range, there is an advantage in that lithium electrodeposition characteristics are excellent, and charge/discharge performance is excellent when applied to a battery. When the coating layer coverage is outside the upper limit of the above-described range, particle sizes of the individual lithiophilic alloy material are excessively large and coverage is excessive, causing a problem in that lithium is deposited on the opposite surface of the protective layer. When Equation 1 is outside the lower limit of the above-described range, particles of the lithiophilic alloy material are excessively small and cannot smoothly form an alloy with lithium, thereby hindering movement of lithium and likewise causing a problem in that lithium is deposited on the opposite surface of the protective layer (30).

In one embodiment, the step of forming the coating layer may be performed at an accumulated current of 0.10 mAh/dm² to 1.30 mAh/dm². The accumulated current means a product of current density and plating time. The accumulated current may be 0.14 mAh/dm² to 1.25 mAh/dm², more specifically 0.40 mAh/dm² to 1.00 mAh/dm², and still more specifically 0.42 mAh/dm² to 0.83 mAh/dm². When the accumulated current satisfies the above-described range, lithium electrodeposition is advantageous, and the number of charge/discharge performance cycles is excellent when applied to a battery.

Specifically, the accumulated current may be differently controlled depending on a component of the current collector and a component of the coating layer. In one embodiment, when the component of the current collector is Ni, the accumulated current may be 0.20 mAh/dm² to 1.25 mAh/dm², more specifically 0.80 mAh/dm² to 1.25 mAh/dm², and still more specifically 0.83 mAh/dm² to 1.25 mAh/dm².

In one embodiment, when the component of the current collector is Fe-Ni, the accumulated current may be 0.14 mAh/dm² to 1.25 mAh/dm², more specifically 0.15 mAh/dm² to 0.50 mAh/dm², and still more specifically 0.20 mAh/dm² to 0.30 mAh/dm².

In one embodiment, when the component of the current collector is STS, the accumulated current may be 0.08 mAh/dm² to 0.40 mAh/dm², more specifically 0.10 mAh/dm² to 0.25 mAh/dm², and still more specifically 0.11 mAh/dm² to 0.20 mAh/dm².

When the accumulated current is outside the upper limit of the above-described range, the plating amount of the lithiophilic alloy material is excessively large, causing excessive coverage and deposition of lithium on the opposite surface of the protective layer. When the accumulated current is outside the lower limit of the above-described range, the plating amount is excessively small, and the amount of the lithiophilic alloy material is insufficient, causing a problem in that an alloy with lithium cannot be smoothly formed.

In one embodiment, the step of forming the coating layer may be performed for a plating time of 45 seconds or less. Specifically, the plating time may be 30 seconds or less, specifically 2.5 seconds to 30 seconds, and more specifically 30 seconds to 40 seconds.

In one embodiment, the step of forming the coating layer may be performed at a plating current in a range of 0.5 mA/cm² to 2.0 mA/cm². Specifically, the plating current may be in a range of 0.5 mA/cm² to 1.5 mA/cm², and more specifically 0.5 mA/cm² to 1.0 mA/cm².

When the plating current and the plating time satisfy the above-described ranges, lithium electrodeposition is easy, and a battery having excellent lifespan characteristics when applied to a battery can be implemented. When the plating current and the plating time are outside the upper limit of the above-described ranges, the plating amount of the lithiophilic alloy material is excessively large, causing excessive coverage and deposition of lithium on the opposite surface of the protective layer. When the plating current and the plating time are outside the lower limit of the above-described ranges, the plating amount is excessively small, and the amount of the lithiophilic alloy material is insufficient, causing a problem in that an alloy with lithium cannot be smoothly formed.

The protective layer (30) may be formed on the surface of the coating layer (20) including the lithiophilic alloy material using a slurry including amorphous carbon. The protective layer (30) may be formed by applying a slurry formed by mixing the amorphous carbon and a binder with water using at least one method selected from a doctor blade method, a dipping method, a reverse roll method, a direct roll method, a gravure method, an extrusion method, and a brush coating method. The protective layer (30) may further include a binder.

Meanwhile, in the step of forming the protective layer (30), the lithium ion conduction-promoting protective layer formed on the surface of the alloy material coating layer may have a thickness of 0.01 µm to 50 µm, and more specifically 1 µm to 20 µm.

After the step of forming the protective layer (30), a step of positioning, in the plating solution (50), the current collector on which the coating layer (20) including the lithiophilic alloy material and the protective layer (30) are sequentially formed, then positioning a lithium supply source (40) at a predetermined distance from the current collector (11), and a step of applying current between the current collector (11) and the lithium supply source (40) to form the metal layer (12) are performed.

Specifically, after the current collector (11) on which the coating layer (20) including the lithiophilic alloy material and the protective layer (30) are formed is positioned in the plating solution, the lithium supply source (40) is positioned at a predetermined distance from the protective layer (30). As the lithium supply source (40), for example, lithium metal, a lithium alloy, a foil obtained by pressing the lithium metal or the lithium alloy onto a current collector, a plating solution in which a lithium salt is dissolved, or the like may be used.

The plating solution (50) may be prepared by dissolving a lithium salt in a plurality of solvents. Specifically, the lithium salt may be LiCl, LiBr, LiI, LiCO₃, LiNO₃, LiFSI, LiTFSI, LiBF₄, LiPF₆, LiAsF₆, LiClO₄, LiN(SO₂CF₃)₂, LiBOB, or a combination thereof. The concentration of the lithium salt may be 1.0 M to 3.0 M based on the entire electrolyte solution.

Specifically, in the present embodiment, the plating solution (50) is characterized by including the lithium salt and a nitrogen-based compound as at least one of the plurality of solvents. The nitrogen-based compound may include, for example, one or more selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as the lithium salt.

Among the nitrogen-based compounds, at least one of ε-caprolactam, N-methyl-ε-caprolactam, triethylamine, and tributylamine may be used as a non-aqueous solvent.

The plating solution (50) may be prepared using only the nitrogen-based compound, but may include a general non-aqueous solvent as an auxiliary solvent in consideration of viscosity or the like of the plating solution (50).

The auxiliary solvent may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

In one embodiment, the auxiliary solvent may be included in an amount of 5 wt% to 70 wt%, preferably 10 wt% to 60 wt%, based on 100 wt% of the entire plating solution (50), but is not limited thereto. However, when the auxiliary solvent is included within the above range, viscosity of the plating solution (50) is appropriate, and thus time required for the process of forming the lithium metal layer (41) can be shortened, but the present invention is not limited thereto.

In one embodiment, the plating solution (50) may further include a fluorine-based compound. When the plating solution (50) further includes the fluorine-based compound, there is an advantage in that characteristics of the film layer formed on the lithium metal layer (41) can be improved.

The fluorine-based compound may include, for example, one or more selected from the group consisting of lithium difluorophosphate, lithium hexafluorophosphate, lithium difluoro bisoxalato phosphate, lithium tetrafluoro oxalato phosphate, lithium difluoro oxalate borate, lithium difluoro oxalato borate, lithium tetrafluoro oxalato borate, fluoroethylene carbonate, difluoroethylene carbonate, and 1,1,2,2-tetrafluoroethyl 2,2,3,3-tetrafluoropropyl ether.

The fluorine-based compound may be included in an amount of 0.1 wt% to 30 wt%, preferably 1 wt% to 20 wt%, and more preferably 1 wt% to 10 wt%, based on 100 wt% of the entire plating solution (50). When the fluorine compound is included within the above range, interaction between the nitrogen-based compound and the fluorine-based compound in the plating solution (50) is smooth, and thus an effect of improving characteristics of the film layer formed on the lithium metal layer (41) is excellent. In addition, excessive generation of LiF due to a direct reaction between the fluorine-based compound and lithium is suppressed, thereby providing excellent electrochemical characteristics.

Next, after an insulating film is positioned between the current collector (11) and the lithium supply source (40), the current collector (11), the lithium supply source (40), and the insulating film may be stacked and restrained from both directions using a restraining device. As the restraining device, as non-limiting examples, methods generally used in the art, such as a manual clamping method and a uniaxial pressing method using hydraulic pressure or pneumatic pressure, may be used.

In the step of applying the current to form the lithium metal layer on at least one surface of the current collector, the current density of the applied current may be in a range of 0.1 mA/cm² to 100 mA/cm², more specifically 0.2 mA/cm² to 50 mA/cm², 5 mA/cm² to 30 mA/cm², or 7 mA/cm² to 25 mA/cm².

In one embodiment, a time for applying the current may be in a range of 0.05 hours to 50 hours, and more specifically 0.25 hours to 25 hours.

In one embodiment, the step of applying the current to form the lithium metal layer on at least one surface of the current collector may be performed at least once at different current densities. The step of applying current may be performed in multiple stages. Specifically, the step of applying current in multiple stages may be performed by increasing the current density stepwise from a low current density to a high current density for predetermined time periods. For example, the step of applying current may be performed by increasing stepwise and electrodepositing in the order of 0.1 mA/cm² to 0.3 mA/cm², 0.3 mA/cm² to 0.7 mA/cm², and 0.8 mA/cm² to 1.5 mA/cm².

In one embodiment, the step of applying current to form the lithium metal layer (12) on at least one surface of the current collector (11) may include electrodepositing at a maximum current density in a range of 6 mA/cm² to 12 mA/cm². Specifically, the maximum current density may be in a range of 8 mA/cm² to 12 mA/cm². The maximum current density means a limit of current density at which lithium electrodeposited in the electrodeposition process can deposit lithium between the protective layer (30) and the current collector (11).

The step of electrodepositing at the maximum current density may be, for example, a step finally performed after a step of depositing in multiple stages for lithium deposition between the current collector (11) and the protective layer (30). When the maximum current density satisfies the above-described range, lithium is appropriately deposited between the current collector (11) and the protective layer (30), thereby providing excellent lifespan characteristics of the battery and excellent bonding strength between the current collector (11) and the protective layer (30).

When the maximum current density is outside the upper limit of the above-described range, since lithium is deposited on the surface of the protective layer (30), there is a problem in that a target stabilized electrode structure cannot be secured. When the maximum current density is outside the lower limit of the above-described range, there is a problem of reduced productivity because the time for electrodepositing lithium increases.

In one embodiment, the step of applying the current to form the lithium metal layer on at least one surface of the current collector may include electrodepositing the deposited lithium to have a thickness in a range of 5 µm to 15 µm. Specifically, the deposited lithium may be electrodeposited to have a thickness in a range of 8 µm to 12 µm. The thickness of the deposited lithium may mean a height in a vertical direction of lithium disposed between the current collector (11) and the protective layer (30).

When the thickness of the deposited lithium is outside the upper limit of the above-described thickness, not only does the energy density of the battery decrease, but process time and the amount of metal raw material used increase when forming the metal layer. When the thickness of the deposited lithium is outside the lower limit of the above-described thickness, initial coulombic efficiency decreases due to initial irreversibility, and surplus lithium is insufficient, thereby deteriorating charge/discharge performance.

In one embodiment, in the step of applying current to form the metal layer (12) on at least one surface of the current collector (11), the thickness of the metal layer (12) including the lithium alloy layer (21) may be controlled to 1 µm to 100 µm. A detailed description of the thickness of the metal layer (12) including the lithium alloy layer (21) may refer to the descriptions of FIGS. 1B and 1C described above.

As described above, in the present embodiment, even under a high-current condition, excessive generation of fine lithium particles is prevented, initially generated lithium particles are induced to grow well, and thus a lithium metal electrode (100) having a metal layer including the lithium alloy layer (21) having a coarse particle structure can be manufactured. In addition, the metal layer manufactured as described above also has excellent surface uniformity.

A lithium secondary battery according to still another embodiment of the present invention includes a positive electrode, a negative electrode, and an electrolyte positioned between the positive electrode and the negative electrode. Here, the negative electrode may be the lithium metal electrode according to the present invention.

In one embodiment, the lithium secondary battery may include an electrode assembly including a positive electrode including a positive electrode active material, a negative electrode that is the lithium metal electrode of the present invention, and a separator disposed between the positive electrode and the negative electrode. Such an electrode assembly may be wound or folded and accommodated in a battery case.

Thereafter, an electrolyte may be injected into the battery case and sealed, thereby completing the secondary battery. At this time, the battery case may have a cylindrical, prismatic, pouch, coin, or other shape.

The positive electrode may include a positive electrode active material layer and a positive electrode current collector. The positive electrode active material layer may include, for example, a Li compound including at least one metal among Ni, Co, Mn, Al, Cr, Fe, Mg, Sr, V, La, and Ce and at least one non-metal element selected from the group consisting of O, F, S, P, and combinations thereof.

In one embodiment, a conductive material may be further added to the positive electrode active material layer. The conductive material may be, for example, carbon black, ultrafine graphite particles, fine carbon such as acetylene black, a nano metal particle paste, or the like, but is not limited thereto.

The positive electrode current collector serves to support the positive electrode active material layer. As the positive electrode current collector, for example, aluminum foil, nickel foil, or a combination thereof may be used, but the positive electrode current collector is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate, and a solvent such as ethylene carbonate, propylene carbonate, or butylene carbonate. In addition, as the solid electrolyte, for example, a gel polymer electrolyte obtained by impregnating an electrolyte solution into a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator commonly used in lithium secondary batteries may be used. Specifically, the separator may have low resistance to ion movement of the electrolyte and excellent electrolyte solution impregnation ability. The separator may be selected from, for example, glass fiber, polyester, polyethylene, polypropylene, polytetrafluoroethylene, or a combination thereof, and may be in a nonwoven or woven fabric form. Meanwhile, when a solid electrolyte is used as the electrolyte, the solid electrolyte may also serve as the separator.

Hereinafter, embodiments of the present invention will be described in detail. However, these are provided as examples, and the present invention is not limited thereto, and the present invention is only defined by the scope of the claims to be described below.

### <Experimental Example>

### Manufacture of Negative Electrode for Lithium Secondary Battery

### <Example 1>

### <Manufacture of Current Collector>

A nickel (Ni) current collector was prepared for use in a negative electrode for a lithium secondary battery of the present invention.

### <Formation of Alloy Material Coating Layer>

Thereafter, an alloy material was coated on both surfaces of the nickel current collector by an electrolytic plating method. Silver (Ag) was used as the alloy material, a current density for plating a lithiophilic layer was controlled to 1 mA/cm², a plating time was controlled to 30 seconds, and the accumulated current amount through this was 0.83 mAh/dm².

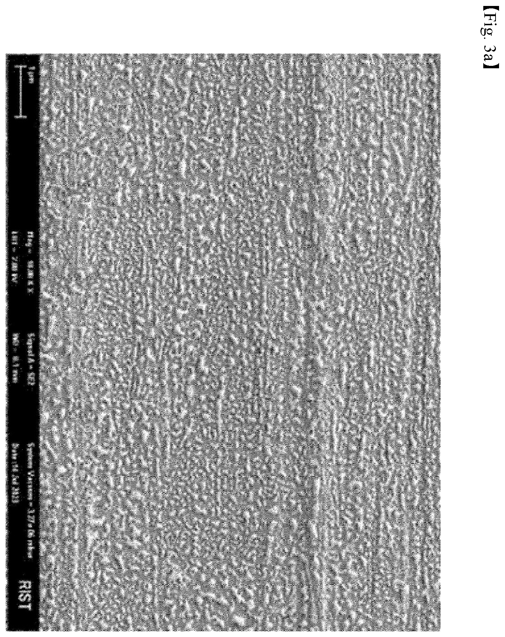

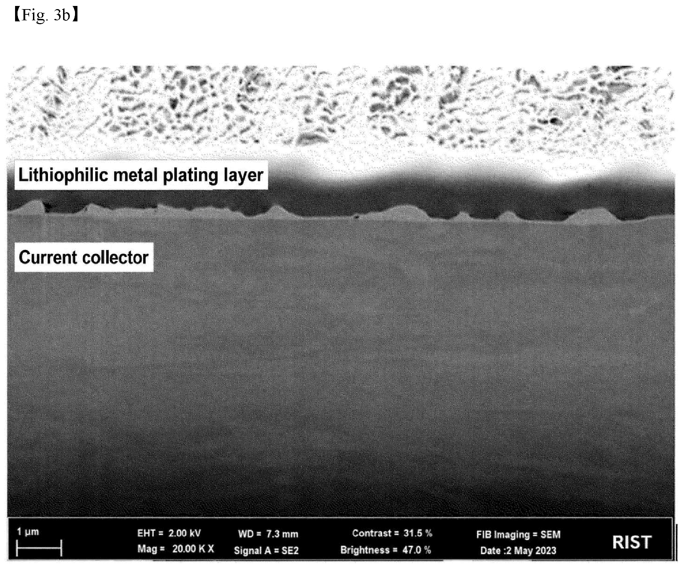

FIGS. 3A and 3B are scanning electron microscope (SEM) photographs showing surface and cross-sectional microstructures of an alloy material coating layer plated on a current collector according to one embodiment of the present invention.

Referring to FIGS. 3A and 3B, it can be confirmed that the lithiophilic layer on the current collector has an island shape in the entire area and has an appropriate level of coverage on the surface of the current collector.

### <Formation of Protective Layer>

Thereafter, a protective layer having a thickness of about 5 µm was formed on an upper surface of the coating layer by slurry coating using a comma coater. Specifically, the protective layer was formed by mixing amorphous carbon, a binder, and a solvent. At this time, as the binder, carboxymethyl cellulose (CMC) and styrene-butadiene rubber (SBR) were added in amounts of 3.0 parts by weight and 6.0 parts by weight, respectively, based on 100 parts by weight of amorphous carbon, for a total of 9.0 parts by weight. In addition, as the solvent, a solvent was used such that water and ethylene glycol (EG) were in a weight ratio of 80:20. The total amount of the solvent was maintained at about 25 wt% based on the total amount of the amorphous carbon and the binder to maintain viscosity appropriate for coating. At this time, acetylene black was used as the amorphous carbon.

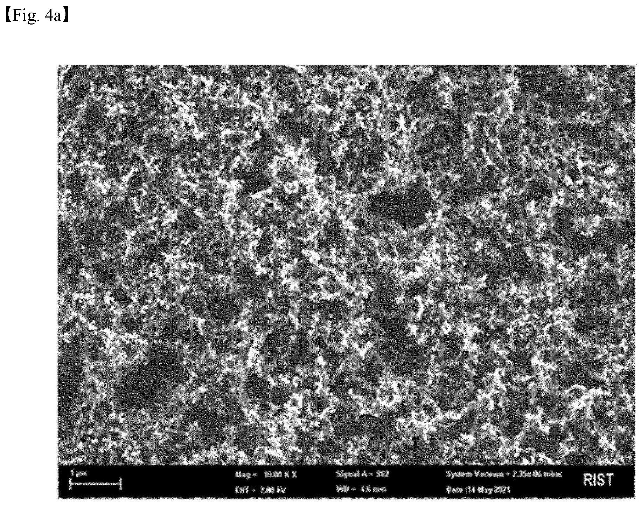

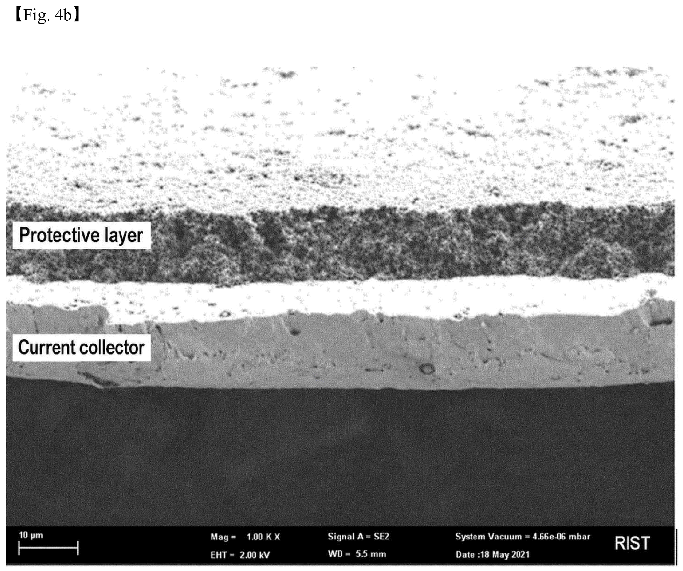

FIGS. 4A and 4B show surface and cross-sectional microstructures when a protective layer is disposed on a current collector coated with an alloy material.

Referring to FIGS. 4A and 4B, it was confirmed that an alloy material coating layer, which is a lithiophilic metal plating layer, was plated on the current collector, and the protective layer was formed on the coating layer.

### <Lithium Electrodeposition Process>

Thereafter, in order to form a lithium alloy or pure lithium metal between the protective layer and the current collector, lithium was detached from a lithium supply source using an electrodeposition process and deposited between the protective layer and the current collector. The plating solution used for such electrodeposition was prepared by adding lithium bis(fluorosulfonyl)imide and lithium nitrate, which are nitrogen-based compounds, in amounts of 40 wt% and 5 wt%, respectively, based on 100 wt% of the plating solution, and adding fluoroethylene carbonate, which is a fluorine-based compound, in an amount of 5 wt% based on 100 wt% of the plating solution, to a mixed solvent in which 1,2-dimethoxyethane (DME) as a first solvent and sulfolane (SL) as a second solvent were mixed at a molar ratio of 90:10. As the lithium supply source (40), a lithium metal plate having a thickness of 500 µm and a purity of 99.9% or more was used by being pressed onto a copper current collecting plate (Cu plate).

After the lithium supply source and the current collector were stacked in the plating solution while being electrically insulated, lithium was deposited between the current collector and the protective layer by applying current using a power supply device, with the lithium supply source and the current collector as (+) and (-) electrodes, respectively.

The current density of the electrodeposition process was increased stepwise in the order of 0.2 mA/cm², 0.5 mA/cm², and 1 mA/cm², and electrodeposition was performed for 5 minutes at each current density, followed by a maximum current density of 10 mA/cm². The electrodeposition time at the maximum current density was variably set according to the magnitude of the maximum current density by calculating a time at which a final accumulated lithium thickness of 10 µm could be electrodeposited.

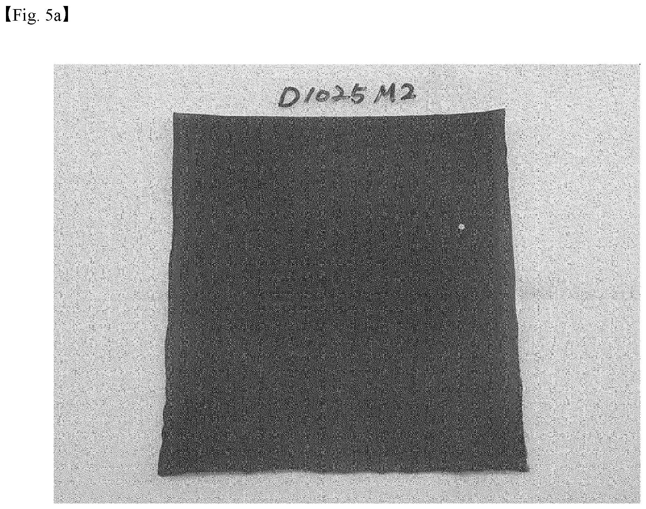

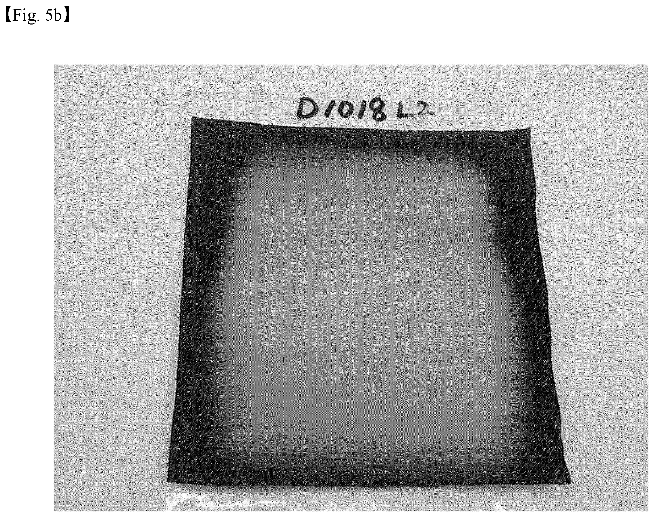

FIGS. 5A and 5B show electrodeposition appearances according to maximum current density in electrodeposition processes according to Examples and Comparative Examples.

FIG. 5A shows an electrodeposition appearance when electrodeposition was performed at a current density equal to or lower than the maximum current density, and FIG. 5B shows an electrodeposition appearance when electrodeposition was performed at a current density exceeding the maximum current density. Referring to FIGS. 5A and 5B, it was confirmed that, when electrodeposition was performed at a current density equal to or lower than an electrodepositable maximum current density, deposited lithium was stacked under the black protective layer, and thus the black protective layer was visible in appearance. When electrodeposition was performed at a current density exceeding the electrodepositable maximum current density, it was confirmed that lithium was stacked on an upper surface of the protective layer and gray lithium was electrodeposited on the upper surface of the protective layer. Through this, the maximum current density was defined as an electrodepositable maximum current density at which lithium is deposited between the current collector and the protective layer in the electrodeposition process.

### Manufacture of All-Solid-State Battery

All-solid-state batteries were manufactured by applying the negative electrodes manufactured according to the above-described Examples and Comparative Examples, and charge/discharge lifespan was evaluated. For evaluation of the all-solid-state battery cells, a pressure-type dedicated evaluation cell manufactured by Tera Leader, which can maintain an inert atmosphere, was used. For manufacturing the all-solid-state battery cell, a sulfide-based argyrodite (Li₆PS₅Cl) solid electrolyte was used as an electrolyte, and the electrolyte was formed in a pellet form to have a thickness of about 0.7 mm. In order to secure a dense electrolyte, the electrolyte was pressurized at a pressure of 370 MPa.

Lithium having a thickness of 0.5 mm was attached to one surface of the electrolyte as a reference electrode, and the negative electrode manufactured according to the Examples and Comparative Examples was attached to the opposite surface. The reference electrode and the evaluation electrode were attached to the solid electrolyte at a pressure of 50 MPa, and during charge/discharge evaluation, the dedicated evaluation cell was pressurized at 16 MPa.

### <Example 2>

The same process as in Example 1 was performed, except that, in the alloy material coating layer plating step, the plating time was 45 seconds and the accumulated current was 1.25 mAh/dm².

### <Example 3>

The same process as in Example 1 was performed, except that, in the alloy material coating layer plating step, the plating time was 10 seconds and the accumulated current was 0.28 mAh/dm².

### <Comparative Example 1>

The same process as in Example 1 was performed, except that, in the alloy material coating layer plating step, the plating time was 50 seconds and the accumulated current was 1.39 mAh/dm².

### <Comparative Example 2>

The same process as in Example 1 was performed, except that, in the alloy material coating layer plating step, the plating time was 5 seconds and the accumulated current was 0.14 mAh/dm².

### <Evaluation Example 1> - Evaluation Based on Same Plating Current

Table 1 below shows lithiophilic layer coverage, island area range, electrodepositable maximum current, and number of charge/discharge performance cycles when plating current, plating time, and accumulated current were controlled when Ag was used as a lithiophilic metal on a Ni current collector.

Lithiophilic layer coverage, island area range, electrodepositable maximum current, and number of charge/discharge performance cycles were measured by the following methods.

Lithiophilic layer coverage and island area range: In order to measure surface coverage and island area of the lithiophilic plating layer, a microstructure was observed using a GEMINI-500 scanning electron microscope manufactured by ZEISS. The coverage of the lithiophilic plating layer was measured, using an ImageJ image program developed by the National Institute of Health (NIH), as an area on a two-dimensional plane of the lithiophilic plating layer relative to the entire area in a photograph observed by the scanning electron microscope. The island was defined as a particle shape having an independent perimeter, and was measured as a range from a minimum area to a maximum area for each island included in an image having a horizontal length of 5 µm, a vertical length of 5 µm, and an area of 25 µm².

Maximum current density (mA/cm²): The maximum current density means a limit of current density at which lithium electrodeposited according to the above process can deposit lithium between the protective layer and the current collector, and the maximum current density was measured.

Number of charge/discharge performance cycles: The reference electrode and the evaluation electrode were attached to the solid electrolyte at a pressure of 50 MPa, and during charge/discharge evaluation, the dedicated evaluation cell was pressurized at 16 MPa. The charge/discharge evaluation was performed by defining one cycle as charging at a constant current of 2 mA/cm² for 0.5 hours and discharging at a constant current of 2 mA/cm² for 0.5 hours. The charge/discharge lifespan was defined as being ended when a short circuit occurred between the reference electrode and the evaluation electrode during charging/discharging or when a voltage between both electrodes exceeded 2 V.

**[Table 1]**

| Classfication | Lithiophilic Layer plating condition | | | | | Product | | Effect | | Equation 1^{*} |
|---|---|---|---|---|---|---|---|---|---|---|
| | Current Collector | Lithiophi lic Metal | Plating Current | Plating Time | Accumulated Current | Lithiophilic Layer Coverage | Island Area Range | Electrodepositable Maximum | Number of Charge/ | |
| | | | | | | | | Current | Discharge Performance Cycles | |
| Unit | - | - | [mA/ cm²] | [Sec] | [mAh/ dm²] | [%] | [µm²] | [mA/ cm²] | [cycle] | - |
| Example 1 | Ni | Ag | 1 | 30 | 0.83 | 51.5 | 0.01~0.10 | 10 | 872 | 42.75 |
| Exa mpl e 2 | Ni | Ag | 1 | 45 | 1.25 | 56.3 | 0.01~0.15 | 8 | 815 | 70.38 |
| Exa mpl e 3 | Ni | Ag | 1 | 10 | 0.28 | 35.2 | 0.01~0.10 | 10 | 728 | 9.86 |
| Co mpa rati ve Exa mpl e 1 | Ni | Ag | 1 | 50 | 1.39 | 83.8 | > 1 | 4 | 442 | 115.79 |
| Comparative Example 2 | Ni | Ag | 1 | 5 | 0.14 | 17.6 | 0.01~0.20 | 2 | 359 | 2.46 |
| Equation 1* = plating time (h) × lithiophilic alloy material coating layer coverage (%) × 100 | | | | | | | | | | |

Referring to Table 1, it was confirmed that, when the current collector material was Ni, the lithiophilic metal was Ag, and the plating current was the same at 1 mA/cm², controlling plating time and accumulated current to control the lithiophilic layer coverage within the range of the present invention resulted in excellent electrodepositable maximum current and number of charge/discharge performance cycles, respectively 8 mA/cm² or more and 700 cycles or more. In contrast, in Comparative Example 1, it was confirmed that the plating time and accumulated current were excessively high, and thus the lithiophilic layer coverage was 83.8%, covering an excessively large area of the current collector with the lithiophilic layer. Accordingly, it was confirmed that islands were not implemented, lithiophilic layer material of 1 µm² or more was formed, the electrodepositable maximum current was low, and the number of charge/discharge performance cycles was inferior. In addition, in Comparative Example 2, the plating time and accumulated current were excessively low, and thus the lithiophilic layer material appeared in an island shape having an area in a range of 0.01 µm² to 0.20 µm². However, it was confirmed that the lithiophilic layer coverage was excessively low, the electrodepositable maximum current was low, and the number of charge/discharge performance cycles was inferior.

In addition, it was confirmed that Examples of the present invention satisfied the value of Equation 1, whereas Comparative Examples did not satisfy the value of Equation 1, and accordingly, it was confirmed that the electrodepositable maximum current and the number of charge/discharge performance cycles were low.

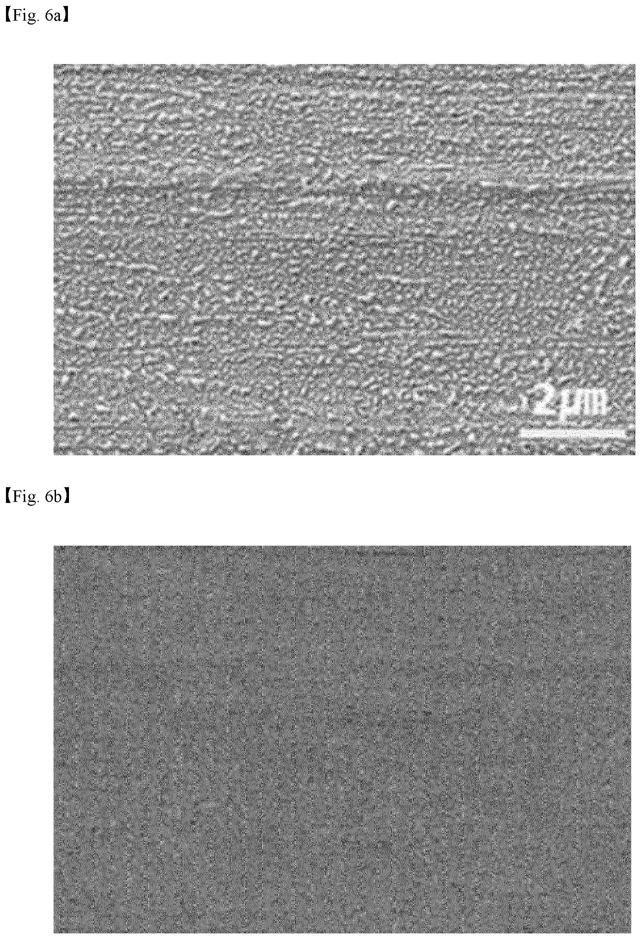

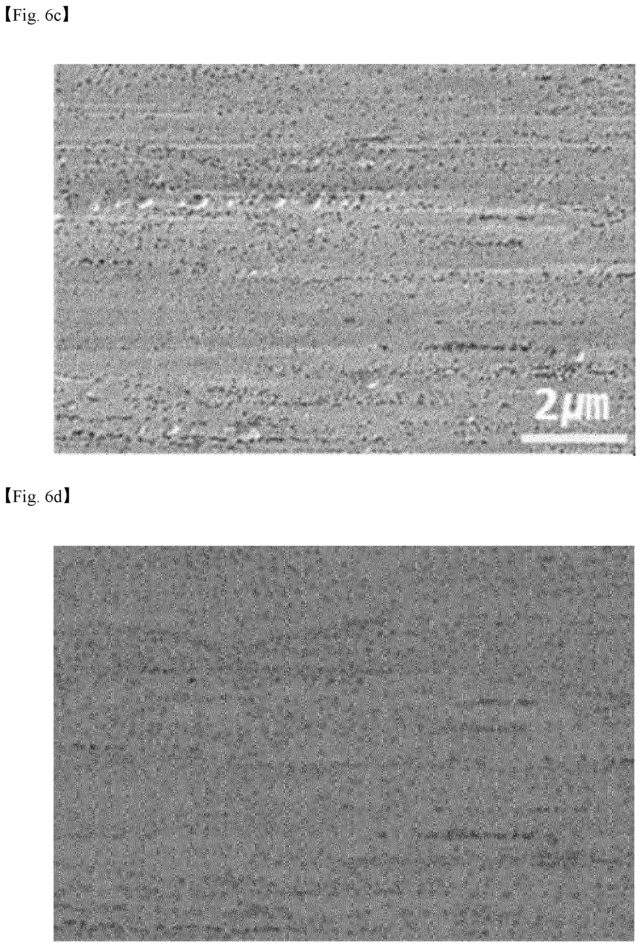

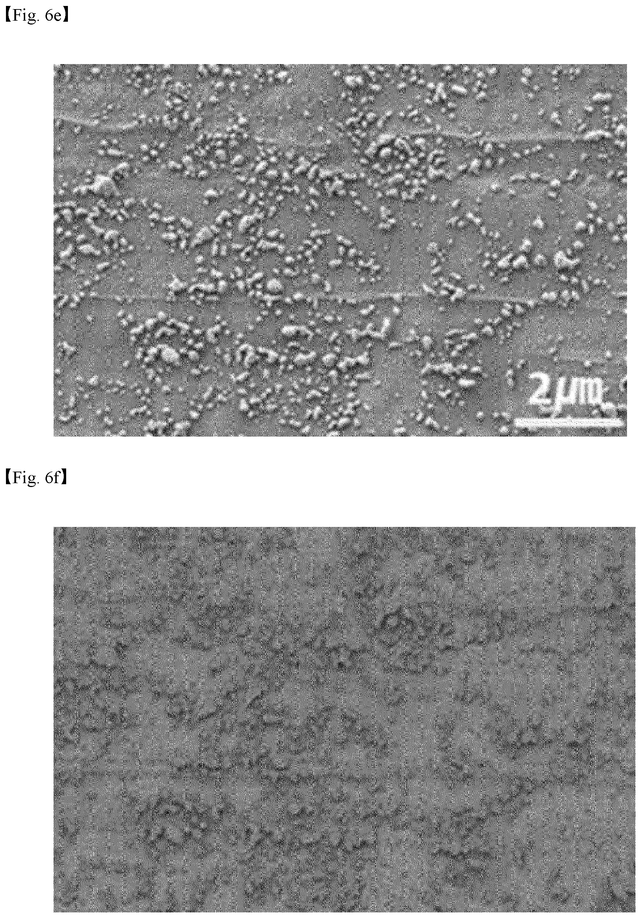

FIGS. 6A and 6B are drawings showing surface microstructure and plating layer image mapping results of an Example of the present invention, FIGS. 6C and 6D are drawings showing surface microstructure and plating layer image mapping results of a Comparative Example of the present invention, and FIGS. 6E and 6F are drawings showing surface microstructure and plating layer image mapping results of another Comparative Example of the present invention.

FIGS. 6A and 6B are drawings showing surface microstructure and plating layer image mapping results of Example 1 of the present invention, FIGS. 6C and 6D are drawings showing surface microstructure and plating layer image mapping results of Comparative Example 1 of the present invention, and FIGS. 6E and 6F are drawings showing surface microstructure and plating layer image mapping results of Comparative Example 2 of the present invention. Referring to FIGS. 6A and 6B, it was confirmed that the coverage fraction of the lithiophilic layer material on the current collector surface was 51.5%, and the island area satisfied a range of 0.01 µm² to 0.10 µm². Referring to FIGS. 6C and 6D, it was confirmed that the coverage fraction of the lithiophilic layer material on the current collector surface was 83.3%, and the island area was greater than 1 µm². Specifically, it can be confirmed that an island shape was not expressed and that particles were agglomerated. Referring to FIGS. 6E and 6F, it can be confirmed that the coverage fraction of the lithiophilic layer material on the current collector surface was 17.6%, and the island area satisfied a range of 0.01 µm² to 0.20 µm².

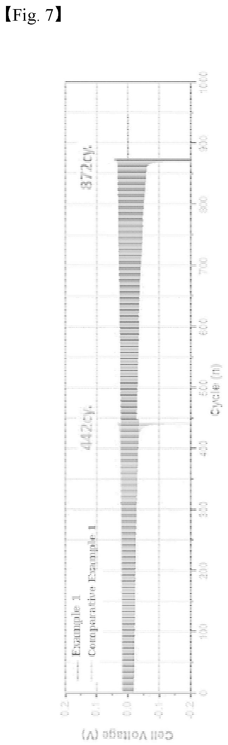

FIG. 7 shows charge/discharge lifespan evaluation results of Examples and Comparative Examples of the present invention.

FIG. 7 shows charge/discharge lifespan evaluation results of all-solid-state batteries manufactured according to Example 1 and Comparative Example 1. Referring to FIG. 7, it can be confirmed that the charge/discharge lifespan evaluation of Example 1 was superior to that of Comparative Example 1.

### <Evaluation Example 2> - Lithiophilic Layer Plating Conditions According to Current Collector Material and Lithiophilic Layer Metal

### <Example 4>

The same process as in Example 1 was performed, except that, in the alloy material coating layer plating step, the plating current was 1.5 mA/cm², the plating time was 20 seconds, and the accumulated current was 0.83 mAh/dm².

### <Example 5>

The same process as in Example 1 was performed, except that, in the alloy material coating layer plating step, Sn was used as the lithiophilic metal instead of Ag, the plating current was 0.5 mA/cm², the plating time was 30 seconds, and the accumulated current was 0.42 mAh/dm².

### <Example 6>

The same process as in Example 1 was performed, except that, in the alloy material coating layer plating step, Fe-Ni was used as the current collector, the plating current was 2 mA/cm², the plating time was 5 seconds, and the accumulated current was 0.28 mAh/dm².

### <Example 7>

The same process as in Example 1 was performed, except that, in the alloy material coating layer plating step, STS (stainless steel) was used as the current collector, the plating current was 0.5 mA/cm², the plating time was 10 seconds, and the accumulated current was 0.14 mAh/dm².

### <Example 8>

The same process as in Example 1 was performed, except that, in the alloy material coating layer plating step, STS (stainless steel) was used as the current collector, the plating current was 1.0 mA/cm², the plating time was 5 seconds, and the accumulated current was 0.14 mAh/dm².

### <Example 9>

The same process as in Example 1 was performed, except that, in the alloy material coating layer plating step, STS (stainless steel) was used as the current collector, the plating current was 2.0 mA/cm², the plating time was 2.5 seconds, and the accumulated current was 0.14 mAh/dm².

### <Comparative Example 3>

The same process as in Example 1 was performed, except that, in the alloy material coating layer plating step, the plating current was 0.5 mA/cm², the plating time was 60 seconds, and the accumulated current was 0.83 mAh/dm².

### <Comparative Example 4>

The same process as in Example 1 was performed, except that, in the alloy material coating layer plating step, STS (stainless steel) was used as the current collector, the plating current was 0.5 mA/cm², the plating time was 30 seconds, and the accumulated current was 0.42 mAh/dm².

### <Comparative Example 5>

The same process as in Example 1 was performed, except that, in the alloy material coating layer plating step, STS (stainless steel) was used as the current collector, the plating current was 0.5 mA/cm², the plating time was 30 seconds, and the accumulated current was 0.07 mAh/dm².

**[Table 2]**

| Classification | Lithiophilic Layer plating condition | | | | | Product | | Effect | | Equation 1^{*} |
|---|---|---|---|---|---|---|---|---|---|---|
| | Current Collector | Lithiophi lic Metal | Plating Current | Plating Time | Accumulated Current | Lithiophilic Layer Coverage | Island Area Range | Electrode positable Maximum Current | Number of Charge/ Discharge Performance Cycles | |
| Unit | - | - | [mA/ cm²] | [Sec] | [mAh/ dm²] | [%] | [µm²] | [mA/ cm²] | [cycle] | - |
| Example 4 | Ni | Ag | 1.5 | 20 | 0.83 | 58.5 | 0.01~0.20 | 10 | 717 | 32.37 |
| Example 5 | Ni | Sn | 0.5 | 30 | 0.42 | 62.5 | 0.01~0.15 | 12 | 902 | 52.50 |
| Exa mpl e 6 | Fe-Ni | Ag | 2.0 | 5 | 0.28 | 53.5 | 0.01~0.15 | 12 | 759 | 7.49 |
| Exa mpl e 7 | STS | Ag | 0.5 | 10 | 0.14 | 38.5 | 0.01~0.25 | 8 | 801 | 10.78 |
| Exa mpl e 8 | STS | Ag | 1.0 | 5 | 0.14 | 43.2 | 0.01~0.20 | 10 | 730 | 6.05 |
| Exa mpl e 9 | STS | Ag | 2.0 | 2.5 | 0.14 | 50.4 | 0.01~0.20 | 10 | 824 | 3.53 |
| Co mp arat ive Exa mpl e 3 | Ni | Ag | 0.5 | 60 | 0.83 | 90.5 | >1 | 4 | 566 | 150.23 |
| Comparative Example 4 | STS | Ag | 0.5 | 30 | 0.42 | 92.5 | >1 | 2 | 476 | 77.70 |
| Comparative Exa mple 5 | STS | Ag | 0.5 | 5 | 0.07 | 23.2 | 0.01~0.20 | 4 | 416 | 3.25 |
| Equation 1* = plating time (h) × lithiophilic alloy material coating layer coverage (%) × 100 | | | | | | | | | | |

Referring to Table 2, even when the type of current collector was different and the lithiophilic metal was different, when the lithiophilic layer coverage was controlled within the range of the present invention, it was confirmed that a difference between Examples and Comparative Examples was clear in terms of electrodepositable maximum current and number of charge/discharge performance cycles. In addition, it was confirmed that the Examples satisfying Equation 1 had a higher electrodepositable maximum current and a superior number of charge/discharge performance cycles compared with the Comparative Examples not satisfying Equation 1.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A lithium metal electrode, comprising:
a current collector;
a coating layer positioned on at least one surface of the current collector and comprising a lithiophilic alloy material; and
a protective layer positioned on the coating layer,
wherein the coating layer is disposed in an area of 25.0% to 80.0% based on an entire area of the current collector.

2. The lithium metal electrode of claim 1,
wherein the coating layer comprises a metal material having a plurality of island shapes.

3. The lithium metal electrode of claim 2,
wherein an area of the island shape is 0.01 µm² to 0.50 µm².

4. The lithium metal electrode of claim 1,
wherein the current collector comprises at least one of copper, nickel, titanium, stainless steel, iron, gold, platinum, silver, tantalum, ruthenium, and alloys thereof.

5. The lithium metal electrode of claim 1,
wherein the lithiophilic alloy material of the coating layer comprises at least one metal selected from the group consisting of In, Ag, Sn, Zn, Si, Al, and Bi.

6. The lithium metal electrode of claim 1,
wherein the protective layer comprises amorphous carbon.

7. The lithium metal electrode of claim 1,
further comprising a metal layer comprising a lithium alloy layer forming a lithium alloy with the coating layer.

8. The lithium metal electrode of claim 7,
wherein the metal layer comprises a lithium metal layer disposed on the lithium alloy layer and comprising lithium.

9. A lithium metal electrode, comprising:
a current collector;
a metal layer comprising a lithium alloy layer forming a lithium alloy with a coating layer positioned on at least one surface of the current collector and comprising a lithiophilic alloy material; and
a protective layer disposed on the metal layer,
wherein the coating layer is disposed in an area of 25.0% to 80.0% based on an entire area of the current collector.

10. The lithium metal electrode of claim 9,
wherein the metal layer comprises a lithium metal layer disposed on the lithium alloy layer and comprising lithium.

11. A method for manufacturing a lithium metal electrode, comprising:
preparing a current collector;
forming, on at least one surface of the current collector, a coating layer comprising a lithiophilic alloy material using a coating composition comprising a lithiophilic component; and
forming a protective layer on a surface of the coating layer comprising the lithiophilic alloy material,
wherein forming the coating layer comprising the lithiophilic alloy material satisfies the following Equation 1: <Equation 1> $3.40 \leq plating time \left(h\right) \times coating layer coverage \left(%\right) \times 100 \leq 75.0$
wherein, in Equation 1, the plating time is an electroplating time in forming the coating layer comprising the lithiophilic alloy material, and the coating layer coverage means an area in which the coating layer comprising the lithiophilic alloy material is disposed, based on 100% of an area of the current collector.

12. The method for manufacturing a lithium metal electrode of claim 11,
wherein forming the coating layer comprising the lithiophilic alloy material comprises controlling the coating layer coverage to 25.0% to 80.0%.

13. The method for manufacturing a lithium metal electrode of claim 11,
further comprising, after forming the protective layer:
positioning, in a plating solution, the current collector on which the coating layer comprising the lithiophilic alloy material and the protective layer are formed, and then positioning a lithium supply source at a predetermined distance from the protective layer; and
applying current between the current collector and the lithium supply source to form a metal layer comprising a lithium alloy in which the lithiophilic component included in the coating layer and lithium deposited from the lithium supply source are alloyed.

14. The method for manufacturing a lithium metal electrode of claim 11,
wherein forming the coating layer comprising the lithiophilic alloy material is performed at an accumulated current of 0.10 mAh/dm² to 1.30 mAh/dm².

15. The method for manufacturing a lithium metal electrode of claim 14,
wherein forming the coating layer comprising the lithiophilic alloy material is performed for a plating time of 45 seconds or less.

16. The method for manufacturing a lithium metal electrode of claim 12,
wherein forming the coating layer comprising the lithiophilic alloy material is performed at a plating current in a range of 0.5 mA/cm² to 2.0 mA/cm².

17. The method for manufacturing a lithium metal electrode of claim 11,
wherein, in applying current between the current collector and the lithium supply source to form the metal layer comprising the lithium alloy in which the lithiophilic component included in the coating layer comprising the lithiophilic alloy material and lithium deposited from the lithium supply source are alloyed,
the method comprises electrodepositing at a maximum current density in a range of 6 mA/cm² to 12 mA/cm².
